# EUROPÄISCHE PATENTSCHRIFT

(11) **EP 4 184 022 B1**
(45) Veröffentlichungstag und Bekanntmachung des Hinweises auf die Patenterteilung: **12.03.2025**
(21) Anmeldenummer: 21208694.6
(22) Anmeldetag: 17.11.2021
(51) Int. Cl.: F16B 27/00

(54) **VERLÄNGERBARES MAGAZIN, BEFÜLLTES MAGAZIN SOWIE VERWENDUNG**
EXTENDIBLE MAGAZINE, FILLED MAGAZINE AND USE
MAGASIN EXTENSIBLE, MAGASIN REMPLI, AINSI QU'UTILISATION

(43) Veröffentlichungstag der Anmeldung: 24.05.2023
(73) Patentinhaber: Hilti Aktiengesellschaft, 9494 Schaan (LI)
(72) Erfinder: Lukic, Sasha, 9470 Buchs (CH); Baumgartner, Gerard, 6003 Luzern (CH); Sprenger, Marius, 9470 Buchs (CH); Ziltener, Michael, 8854 Siebnen (CH)
(74) Vertreter: Hilti Aktiengesellschaft Corporate Intellectual Property

(56) Entgegenhaltungen:
- EP-A1- 3 613 544
- WO-A1-2010/000381
- AT-B- 384 765
- CN-A- 103 511 428
- US-B2- 8 544 369

## Beschreibung

Die Erfindung geht aus von einem Magazin, das zur Aufnahme wenigstens eines Befestigungsmittels geeignet ist.

Oftmals sind Bauelemente, beispielsweise Installationselemente, an Wände, Decken oder Böden eines Gebäudes oder dergleichen mit Befestigungsmitteln zu befestigen. Da zur Befestigung eine Vielzahl solcher Befestigungsmittel benötigt wird, kommen Magazine zum Einsatz. Diese stellen mehrere der Befestigungsmittel auf einfache Weise einem Benutzer zur Verfügung.

Aus der DE10162635 A1 ist beispielsweise ein bandförmiges Schraubenmagazin bekannt, dass für Befestigungsmittel wie beispielsweise Schrauben verwendet werden kann.

Ein weiteres Magazin ist aus der WO 2010/000381 A1 bekannt.

Manche Befestigungsmittel weisen einen Kragen auf. Zusammen mit einem Kopf des Befestigungsmittels weist ein solches Befestigungsmittel ein vergleichsweise hohes Gewicht auf. Das Gewicht ist dabei besonders ungleich über die Länge des Befestigungsmittels hinweg verteilt. Je nach Lage des Magazins kann daher ein Risiko bestehen, dass das Befestigungsmittel aus dem Magazin herausfällt.

Aufgabe der vorliegenden Erfindung ist es daher, ein Magazin anzubieten, dass eine sichere Magazinierung von Befestigungsmitteln mit Kragen ermöglicht.

Gelöst wird die Aufgabe durch ein Magazin gemäß Anspruch 1, geeignet zur Aufnahme wenigstens eines Befestigungsmittels, wobei das Magazin wenigstens eine Aufnahmezelle umfasst, wobei jede Aufnahmezelle einen Zellenrahmen aufweist, der eine Durchgangsöffnung aufweist, wobei sich die Durchgangsöffnung durch die Aufnahmezelle hindurch erstreckt, wobei jede Aufnahmezelle eine Vielzahl von Eingriffsfingern aufweist, die sich vom Zellenrahmen aus mit ihrem freien Ende in die Durchgangsöffnung erstrecken, wobei jeder der Eingriffsfinger wenigstens einen Steg aufweist. Ein Befestigungsmittel mit einem Kragen kann entlang einer Einsteckrichtung in die Durchgangsöffnung eingeführt werden. Die Einsteckrichtung kann senkrecht oder im Wesentlichen senkrecht zu einer von dem jeweiligen Zellenrahmen aufgespannten Ebene verlaufen. "Im Wesentlichen" kann einer Abweichung von beispielsweise höchstens 10 Grad, insbesondere von höchstens 5 Grad, von der Senkrechten entsprechen.

In dieselbe Aufnahmezelle können somit nacheinander mehrere Befestigungsmittel eingeführt und jeweils anschließend wieder entnommen werden. Das Magazin kann somit mehrfach verwendet werden.

Ein oder mehrere der Eingriffsfinger können, insbesondere mit ihren Stegen, das Befestigungsmittel an seinem Kragen greifen und / oder dieses im Magazin halten.

Unter einem Eingriffsfinger kann beispielsweise ein länglicher, vom Zellenrahmen abstehender Abschnitt des Zellenrahmens verstanden werden. Der Eingriffsfinger kann auch ein vom Zellenrahmen separat ausgebildetes Teil sein. Der Eingriffsfinger kann ein freies Ende aufweisen.

Der Steg kann seitlich von dem jeweiligen Eingriffsfinger abragen. Unter "seitlich" kann eine Richtung in einer senkrechten Ebene oder in einer zumindest im Wesentlichen zu der Einsteckrichtung senkrechten Ebene verstanden werden.

Wenigstens ein Eingriffsfinger einer Aufnahmezelle kann wenigstens zwei Stege aufweisen. Die Stege können entlang der Einsteckrichtung auf unterschiedlichen Höhen ausgebildet sein. Dann kann der Eingriffsfinger den Kragen gleichzeitig an mehreren Stellen, beispielsweise an einer Oberseite als auch an einer Unterseite, zumindest teilweise umschließen.

Der Eingriffsfinger kann elastisch verformbar sein. Somit können unterschiedliche Arten von Befestigungsmitteln, beispielsweise mit unterschiedlichen Größen ihrer Kragen in demselben Magazin gehalten werden.

Insbesondere kann der Eingriffsfinger entlang der Einsteckrichtung eine höhere Federhärte aufweisen als senkrecht zur Einsteckrichtung. Er kann, zumindest in einem Bereich, einen asymmetrischen Querschnitt aufweisen.

Beim Einführen des Befestigungsmittels in die Durchgangsöffnung kann dieses, beispielsweise mit seinem Kragen, den Eingriffsfinger kontaktieren. Dabei kann das Befestigungsmittel bei einem solchen Kontakt auf den Eingriffsfinger drücken. Dieser kann eingerichtet sein, durch den Druck nach außen, insbesondere aus der Durchgangsöffnung heraus und / oder zum Zellenrahmen hin, zu schwenken. Durch die unterschiedlichen, richtungsabhängigen Federhärten des Eingriffsfingers kann dabei der Eingriffsfinger zumindest im Wesentlichen seitlich und vorzugsweise nicht oder nur in geringem Maße entlang der Einsteckrichtung verschwenken.

Das Verschwenken lässt sich präzise steuern, wenn wenigstens ein Eingriffsfinger einer Aufnahmezelle eine Steuerkontur aufweist. Die Steuerkontur kann eingerichtet sein, dass bei Druck auf die Steuerkontur entlang der Einsteckrichtung der Eingriffsfinger aus der Durchgangsöffnung herausschwenkt. Dabei kann "herausschwenken" bedeuten, dass der Eingriffsfinger die Durchgangsöffnung verlässt. Alternativ oder ergänzend kann das auch bedeuten, dass der Eingriffsfinger zwar im Bereich der Durchgangsöffnung verbleibt, sich jedoch durch den Druck weg von einem Zentrum der Durchgangsöffnung, beispielsweise zum Zellenrahmen hin, bewegt.

Somit kann durch Einführen des Befestigungsmittels die Durchgangsöffnung geöffnet werden. Das Befestigungsmittel kann, insbesondere mit seinem Kragen, zwischen die Eingriffsfinger gelangen. Die Eingriffsfinger können dann, insbesondere durch ihre Stege, das Befestigungsmittel halten. Die Eingriffsfinger können insbesondere eingerichtet sein, dass der Kragen in diesen, insbesondere zwischen den Stegen, verrastet wird.

Zwei benachbarte Aufnahmezellen des Magazins können über einen Verbindungsabschnitt miteinander verbunden sein. Der Verbindungsabschnitt kann eine geringe Federhärte aufweisen.

Insbesondere kann der Verbindungsabschnitt eine geringere Federhärte aufweisen als eine, insbesondere angrenzende, Aufnahmezelle. Somit kann das Magazin im Bereich des Verbindungsabschnitt besonders biegbar sein. Insgesamt kann sich somit ein flexibel verformbares Magazin ausbilden sein. Das Magazin kann beispielsweise wickelbar sein.

Um mehrere Magazine miteinander verketten zu können, kann das Magazin wenigstens einen Verbinder aufweisen. Der Verbinder kann zur Verbindung mit einem weiteren Magazin eingerichtet sein.

Insbesondere kann der Verbinder als symmetrischer Verbinder ausgebildet sein. D. h., er kann derart ausgebildet sein, dass er mit einem zweiten, gleichartigen Verbinder verbindbar, beispielsweise zusammensteckbar, ist.

Alternativ kann der Verbinder auch als asymmetrischer Verbinder ausgebildet sein. Insbesondere kann es einen männlichen und einen weiblichen Verbinder geben. Beispielsweise kann der weibliche Verbinder einen Buchsenabschnitt aufweisen. Der männliche Verbinder kann einen Steckabschnitt aufweisen. Der Steckabschnitt kann kongruent zum Buchsenabschnitt ausgebildet sein.

Das Magazin kann insgesamt wenigstens einen weiblichen Verbinder und wenigstens einen zum weiblichen Verbinder kongruenten, männlichen Verbinder aufweisen. Somit lassen sich mehrere Magazine dadurch verbinden, dass nacheinander jeweils ein männlicher mit einem weiblichen Verbinder verbunden, insbesondere zusammengesteckt, wird.

Um ein versehentliches Herausrutschen zu verhindern, kann wenigstens einer der Verbinder einen Rastmechanismus oder zumindest einen Teilrastmechanismus aufweisen. Ein oder mehrere der Eingriffsfinger können auch gemeinsam einen Rastmechanismus ausbilden. Unter einem Teilrastmechanismus kann dabei verstanden werden, dass der Verbinder eine Struktur aufweist, die eingerichtet ist, sich mit einem anderen, nicht notwendigerweise gleichartigen, Verbinder eines anderen Magazins rastend zu verbinden.

Es entspricht der Erfahrung, dass Reststoffe auf Baustellen nicht immer ordnungsgemäß entsorgt werden. Daher ist es wünschenswert, wenn etwaige Reststoffe umweltunschädlich ausgebildet sind. Daher ist erfindungsgemäß vorgesehen, dass das Magazin aus einem biologisch abbaubaren Material ausgebildet ist.

Ein Material kann beispielsweise als biologisch abbaubar gelten, wenn das Material in einem wässrigen Medium innerhalb von 180 Tagen zu 90 Prozent biologisch zersetzt ist. Denkbar ist alternativ oder ergänzend auch, dass ein Material als biologisch abbaubar gilt, wenn es eine für dieses Material geltende Norm zur Kompostierbarkeit und / oder biologischen Abbaubarkeit erfüllt.

Ein solches Material kann beispielsweise eine Naturfaser umfassen. Denkbar ist beispielsweise auch, dass das Material Holz umfasst. Alternativ oder ergänzend kann es auch ein Gras umfassen. Beispielsweise kann das biologisch abbaubare Material Papier, Pappe, Hanf und / oder Bambus umfassen. Es kann auch einen biologisch abbaubaren Kunststoff umfassen.

Somit können Umweltschäden vermieden werden, selbst wenn ein Benutzer des Magazins dieses nach Nutzung nicht ordnungsgemäß entsorgt.

Insbesondere für diesen Fall ist es besonders vorteilhaft, wenn das Magazin vollständig biologisch abbaubar ist. Dabei kann sich "vollständig" auf eine Hauptkomponente des Magazins beschränken. Beispielsweise kann auch ein Magazin von "vollständig biologisch abbaubar" umfasst sein, das in sehr geringen Mengen, beispielsweise weniger als 5 Gewichts-Prozent, insbesondere weniger als 1 Gewichts-Prozent, besonders bevorzugt weniger als 1 Gewichts-Promille, nicht biologisch abbaubare Stoffe aufweist. Solche Stoffe können beispielsweise Farbpigmente von Beschriftungen oder dergleichen des Magazins sein. Besonders bevorzugt ist allerdings auch, wenn Beschriftungen oder dergleichen ebenfalls aus biologisch abbaubaren Materialien ausgebildet sind.

Das Magazin kann besonders günstig handhabbar sein, wenn es streifenförmig ausgebildet ist.

Um beispielsweise bestimmte Anzahlen von Befestigungsmitteln dem Magazin am Stück entnehmen zu können, kann das Magazin an wenigstens einer Stelle eine Perforierung und / oder eine Engstelle aufweisen. Entlang der Perforierung bzw. der Engstelle kann das Magazin in mehrere Teile geteilt werden.

Um das Magazin einfach mit einer Werkzeugmaschine, beispielsweise einer Handwerkzeugmaschine oder einem Bauroboter, verwenden zu können, kann das Magazin ein Lochraster und / oder eine Führungsnut aufweisen.

In den Rahmen der Erfindung fällt des Weiteren ein **befülltes Magazin.** Das befüllte Magazin umfasst ein Magazin der vorangehend beschriebenen Art. Das Magazin ist mit wenigstens einem Befestigungsmittel, welches einen Kragen aufweist, befüllt. Bei wenigstens einem der Befestigungsmittel kann der Kragen des Befestigungsmittels von wenigstens einem Eingriffsfinger gehalten sein.

Vorzugsweise weist das befüllte Magazin eine Vielzahl, beispielsweise wenigstens 5, 10 oder 20, Befestigungsmittel auf.

Das Befestigungsmittel kann beispielweise ein Schraubanker sein. Alternativ oder ergänzend kann es auch ein Nagel sein. Beispielsweise kann es sich um einen Betonanker, beispielsweise eine Betonschraube, handeln.

Auch ist denkbar, dass das Befestigungsmittel zur Fixierung von Dämmstoffen eingerichtet ist. Insbesondere kann es als Dämmstoffanker mit einem Kragen ausgebildet sein.

Auch fällt in den Rahmen der Erfindung eine **Verwendung** eines befüllten Magazins der vorangehend beschriebenen Art durch einem Bauroboter zum Setzen eines Befestigungsmittels in eine Decke und / oder eine Wand auf einer Baustelle. Die Baustelle kann beispielsweise eine Hochbau- und / oder eine Tiefbaubaustelle sein und / oder umfassen.

Der Bauroboter kann eine Werkzeugmaschine aufweisen, beispielsweise ein Setzgerät zum Setzen des Befestigungsmittels. Er kann einen Manipulator aufweisen. Die Werkzeugmaschine kann am Manipulator angeordnet sein. Der Manipulator kann beispielsweise als mehrachsiger Arm ausgebildet sein. Er kann auch eine Hebevorrichtung aufweisen. Der Manipulator kann wenigstens drei Freiheitsgrade, beispielsweise wenigstens sechs Freiheitsgrade aufweisen. Insbesondere kann dann der Bauroboter zur Ausführung von Bauarbeiten, insbesondere zum Setzen der Befestigungsmittel, in die Decke und / oder in die Wand eingerichtet sein.

Das Magazin kann an der Werkzeugmaschine anordenbar sein. Die Werkzeugmaschine kann, insbesondere in Zusammenarbeit mit dem Manipulator, eingerichtet sein, dem Magazin nacheinander Befestigungselemente zu entnehmen und diese jeweils, insbesondere in die Decke und / oder in die Wand, zu setzen.

Dadurch, dass die Befestigungsmittel unabhängig von der Lage des Magazins sicher in diesem gehalten werden können und somit nicht unbeabsichtigt herausfallen, kann die Werkzeugmaschine die Befestigungsmittel in nahezu beliebigen Lagen und / oder Richtungen setzen, insbesondere horizontal und / oder vertikal. Die Werkzeugmaschine kann mit hoher Geschwindigkeit repositioniert werden, ohne dass durch entstehende Beschleunigungen Befestigungsmittel aus dem Magazin herausfallen. Somit kann auf einer Baustelle eine hohe Setzfrequenz erzielt werden. Zudem lässt sich die Zuverlässigkeit der Setzvorgänge durch die Verwendung des Magazins steigern. Dies ist insbesondere beim Einsatz von Baurobotern und hier insbesondere zur Erzielung eines möglichst hohen Autonomiegrades, wichtig.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können innerhalb des durch die Ansprüche definierten Schutzumfangs je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine perspektivische Darstellung eines befüllten Magazins;
- Fig. 2 und 3: perspektivische Darstellungen von Verbindern;
- Fig. 4: eine Ansicht von oben auf eine Aufnahmezelle mit einem Befestigungsmittel;
- Fig. 5 und 6: Querschnittsansichten auf die Aufnahmezelle mit dem Befestigungsmittel gemäß Fig. 4; und
- Fig. 7 und 8: vergrößerte Detailansichten der Querschnittsansichten aus Fig. 5 und 6.

In der nachfolgenden Beschreibung der Figuren werden zur Erleichterung des Verständnisses der Erfindung für gleiche oder sich funktional entsprechende Elemente jeweils die gleichen Bezugszeichen verwendet. Zur Vereinfachung der Darstellung ist in der Regel bei mehreren gleichartigen Elementen in den einzelnen Figuren jeweils nur eines der Elemente mit einem Bezugszeichen versehen.

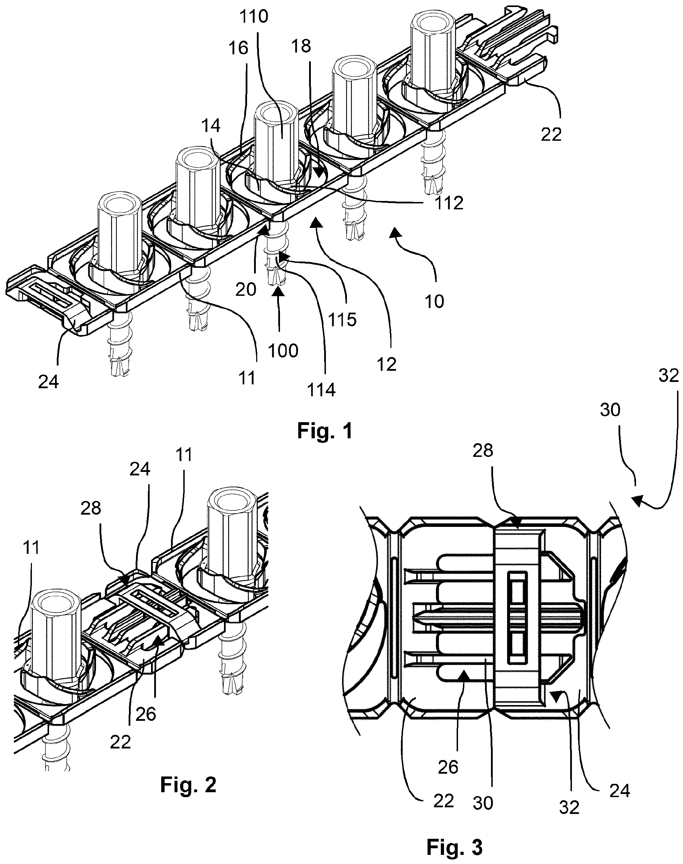

**Fig. 1** zeigt ein befülltes Magazin **10** in einer perspektivischen Darstellung.

Das befüllte Magazins 10 weist ein Magazin **11** auf. Das Magazin 11 ist als Streifen ausgebildet. Es ist somit streifenförmig.

In das Magazin 11 sind mehrere Befestigungsmittel **100** aufgenommen. Das Magazin 11 weist dazu mehrere Aufnahmezellen **12** auf.

Jede der Aufnahmezellen 12 weist mehrere, insbesondere drei, Eingriffsfinger **14** auf. Die Eingriffsfinger 14 befinden sich jeweils an einem Zellenrahmen **16** der jeweiligen Aufnahmezelle 12. In ihrem Inneren weisen die Zellenrahmen 16 jeweils Durchgangsöffnungen **18** auf. Erfindungsgemäß ist das Magazin 11 aus einem biologisch abbaubaren, vorzugsweise vollständig abbaubaren Material, beispielsweise aus einem biologisch abbaubaren Kunststoff gefertigt. Somit können die Eingriffsfinger 14 weiterhin elastisch verformbar sein. Zusätzlich können Umweltschäden durch durch vorschriftswidrige Entsorgung des Magazine 11 vermieden werden. Auch kann einer Freisetzung von Mikroplastik in die Umwelt entgegengewirkt werden.

Die Befestigungsmittel 100 weisen jeweils einen Kopf **110,** einen Kragen **112** sowie einen Schaft **114** auf.

Bei diesem Ausführungsbeispiel ist das Befestigungsmittel 100 mit dem Kragen 112 als Schraubanker ausgeführt. Dazu weist es ein Gewinde **115** auf. Das Befestigungsmittel 100 kann beispielsweise eine Betonschraube sein.

Angrenzend an die Aufnahmezellen 12 befinden sich Verbindungsabschnitte **20.** Die Verbindungsabschnitte 20 sind biegeelastisch. Sie weisen jeweils vergleichsweise geringe Federhärten auf. Dazu können sie beispielsweise dünner und / oder schmaler und / oder aus einem anderen Material als die übrigen Bereiche des Magazins 11 ausgebildet sein.

An seinen beiden längsseitigen Enden weist das Magazin 11 jeweils Verbinder **22** und **24** auf. Die Verbinder 22, 24 sind zum Verbinden mehrerer gleichartiger Magazine 11 miteinander eingerichtet.

**Fig. 2 und 3** zeigen derartige Verbinder 22, 24 in einer perspektivischen Darstellung sowie in einer Ansicht von vorne.

Zwei Magazine 11, die beispielsweise gleichartig, insbesondere identisch, aufgebaut sein können, sind über die Verbinder 22, 24 miteinander verbunden.

Dazu ist der Verbinder 22 als männlicher Verbinder ausgebildet. Er weist einen Steckabschnitt **26** auf. Der Verbinder 24 ist komplementär zum Verbinder 22 und insbesondere als weiblicher Verbinder aufgebaut. Dazu weist er einen Buchsenabschnitt **28** auf. Wie insbesondere anhand von Fig. 3 zu erkennen ist, weist der männliche Verbinder 22 mehrere Rastzungen **30** auf. Die Rastzungen 30 des Steckabschnitts 26 können zugeordnete Rastabschnitte **32** des Buchsenabschnitts 28 hintergreifen. Die Verbinder 22, 24 bilden somit jeweils einen Teilrastmechanismus aus. Zusammen bilden sie einen Rastmechanismus aus. Mittels des Rastmechanismus werden die Verbinder 22, 24 selbst bei Zugbelastungen oder dergleichen im zusammengesteckten Zustand aneinander gehalten.

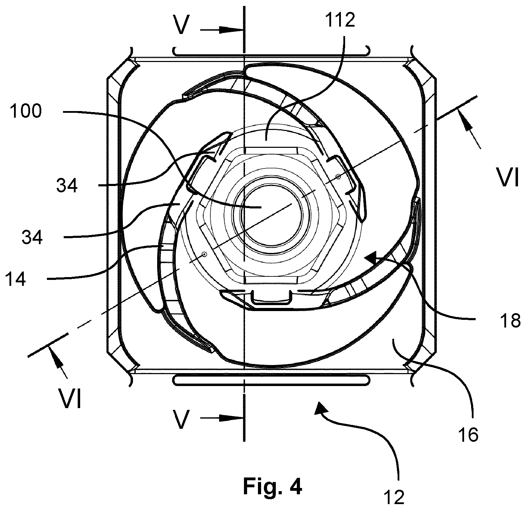

**Fig. 4** zeigt eine Ansicht von oben auf eine Aufnahmezelle 12 mit ihrem Zellenrahmen 16 und einem Befestigungselement 100.

Am Zellenrahmen 16 greifen drei Eingriffsfinger 14 an. Mit ihren freien Enden verengen sie einen zentralen, freien Bereich der Durchgangsöffnung 18. Insbesondere umgreifen sie mit Stegen **34** den Kragen 112 des Befestigungsmittels 100.

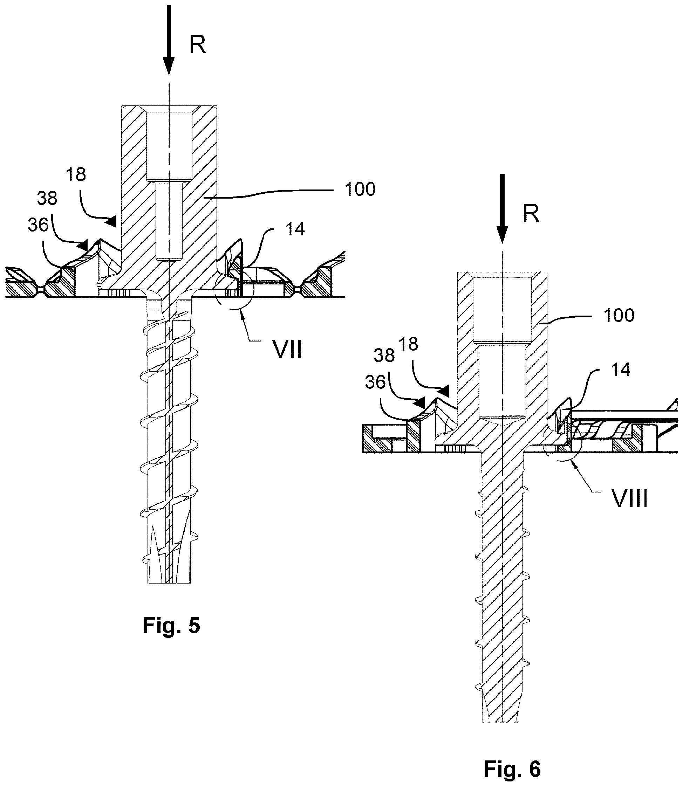

**Fig. 5** zeigt einen Querschnitt der Aufnahmezelle 12 gemäß der Schnittlinie V aus Fig. 4 und **Fig. 6** zeigt einen solchen gemäß der Schnittlinie **VI** aus Fig. 4.

Zu erkennen ist jeweils, dass das Befestigungsmittel 100 mit seinem Kragen 112 in der Durchgangsöffnung 18 sitzt. Dazu wird es durch die Eingriffsfinger 14 in der Durchgangsöffnung 18 gehalten.

Jeder Eingriffsfinger 14 kann eine Steuerkontur **36** aufweisen. Die Steuerkontur 36 kann derart ausgebildet sein, dass bei Druck auf diese entlang einer Einsteckrichtung **R,** wie er beispielsweise durch das Befestigungsmittel 100 beim Einführen in die Durchgangsöffnung 18 ausgeübt werden kann, der Eingriffsfinger 14 aus der Durchgangsöffnung 18 herausgedrängt wird. Die Einsteckrichtung R entspricht dabei einer Richtung, entlang der das Befestigungsmittel 100 in die Durchgangsöffnung 18 einführbar ist.

Insbesondere weist die Steuerkontur 36 eine Schräge **38** auf, deren Oberfläche schräg zur Einsteckrichtung R verläuft.

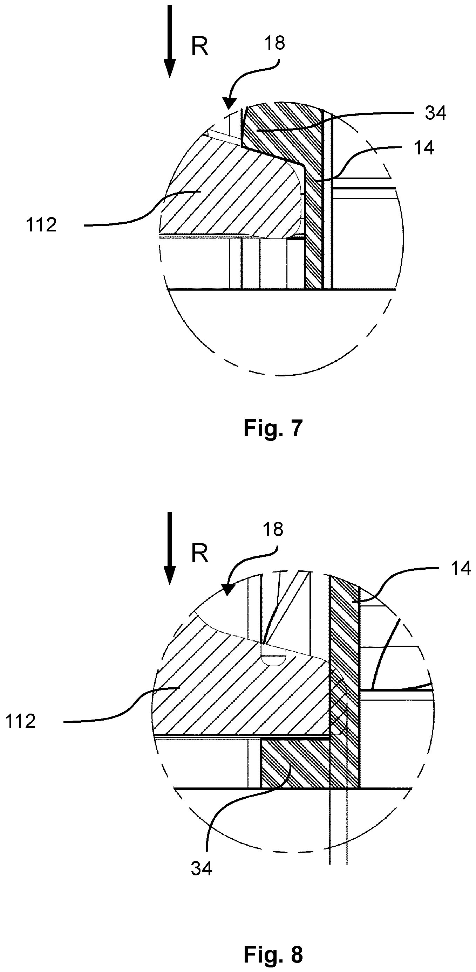

**Fig. 7** und **Fig. 8** zeigen vergrößerte Darstellungen der Ausschnitte **VII** und **VIII** gemäß Fig. 5 bzw. Fig. 6.

Bei diesem Ausführungsbeispiel weist jeder Eingriffsfinger 14 mehrere der Stege 34 auf.

Die Stege 34 ragen insbesondere senkrecht zu der Einsteckrichtung **R** vom jeweiligen Eingriffsfinger 14 ab.

Wie sich aus dem Vergleich von Fig. 7 mit Fig. 8 ergibt, sind die Stege 34 in unterschiedlichen Höhenlagen entlang der Einsteckrichtung R angeordnet bzw. ausgebildet. Ihr Abstand entlang der Einsteckrichtung R kann, zumindest in etwa, einer Dicke des Kragens 112 entsprechen.

Die Stege 34 reichen jeweils über einen Randbereich des Kragens 112. Der in Fig. 7 gezeigte Steg 34 hält den Kragen 112 an einer Oberseite, während der in Fig. 8 gezeigte Steg 34 den Kragen 112 an einer der Oberseite gegenüberliegenden Unterseite hält.

Der Kragen 112 sitzt somit verrastet zwischen den Stegen 34.

Um ein Herausschwenken aus der Durchgangsöffnung 18 zu erleichtern, weist der Eingriffsfinger 14 zumindest bereichsweise, insbesondere außerhalb der Stege 34, einen rechteckigen Querschnitt auf. Insbesondere besitzt er in Richtung der Einsteckrichtung R eine größere Federhärte als quer zu dieser.

### Bezugszeichenliste

- 10: befülltes Magazin
- 11: Magazin
- 12: Aufnahmezelle
- 14: Eingriffsfinger
- 16: Zellenrahmen
- 18: Durchgangsöffnung
- 20: Verbindungsabschnitt
- 22: Verbinder
- 24: Verbinder
- 26: Steckabschnitt
- 28: Buchsenabschnitt
- 30: Rastzunge
- 32: Rastabschnitt
- 34: Steg
- 36: Steuerkontur
- 38: Schräge
- 100: Befestigungsmittel
- 110: Kopf
- 112: Kragen
- 114: Schaft
- 115: Gewinde
- R: Einsteckrichtung
- V: Schnittlinie
- VI: Schnittlinie
- VII: Bereich
- VIII: Bereich

## Patentansprüche

1. **Magazin (11),** geeignet zur Aufnahme wenigstens eines Befestigungsmittels (100),
- wobei das Magazin (11) wenigstens eine Aufnahmezelle (12) umfasst,
- wobei jede Aufnahmezelle (12) einen Zellenrahmen (16) aufweist, der eine Durchgangsöffnung (18) aufweist, wobei sich die Durchgangsöffnung (18) durch die Aufnahmezelle (12) hindurch erstreckt,
- wobei jede Aufnahmezelle (12) eine Vielzahl von Eingriffsfingern (14) aufweist, die sich vom Zellenrahmen (16) aus mit ihrem freien Ende in die Durchgangsöffnung (18) erstrecken, wobei jeder der Eingriffsfinger (14) wenigstens einen Steg (34) aufweist,
**dadurch gekennzeichnet, dass** das Magazin (11) aus einem biologisch abbaubaren Material ausgebildet ist.

2. Magazin nach dem vorhergehenden Anspruch, **dadurch gekennzeichnet, dass** wenigstens ein Eingriffsfinger (14) einer Aufnahmezelle (12) wenigstens zwei Stege (34) aufweist.

3. Magazin nach einem der vorhergehenden Ansprüche, **dadurch gekennzeichnet, dass** wenigstens ein Eingriffsfinger (14) einer Aufnahmezelle (12) eine Steuerkontur (36) aufweist, sodass bei Druck auf die Steuerkontur (36) entlang einer Einsteckrichtung (R) der Eingriffsfinger (14) aus der Durchgangsöffnung (18), insbesondere zum Zellenrahmen (16) hin, herausschwenkt.

4. Magazin nach einem der vorhergehenden Ansprüche, **dadurch gekennzeichnet, dass** zwei benachbarte Aufnahmezellen (12) des Magazins (11) über einen Verbindungsabschnitt (20) miteinander verbunden sind, wobei der Verbindungsabschnitt (20) eine geringere Federhärte aufweist als eine angrenzende Aufnahmezelle (12).

5. Magazin nach einem der vorhergehenden Ansprüche, **dadurch gekennzeichnet, dass** das Magazin (12) wenigstens einen Verbinder (22, 24) aufweist, der zur Verbindung mit einem weiteren Magazin (11) eingerichtet ist.

6. Magazin nach dem vorhergehenden Anspruch, **dadurch gekennzeichnet,**
- **dass** der Verbinder (22, 24) als symmetrischer Verbinder ausgebildet ist oder
- **dass** der Verbinder (22, 24) als asymmetrischer Verbinder ausgebildet ist, wobei das Magazin (11) wenigstens einen weiblichen Verbinder und wenigstens einen zum weiblichen Verbinder kongruenten männlichen Verbinder aufweist.

7. Magazin nach einem der Ansprüche 5 oder 6, **dadurch gekennzeichnet, dass** der Verbinder (22, 24) einen Rastmechanismus oder zumindest einen Teilrastmechanismus aufweist.

8. Magazin nach einem der vorhergehenden Ansprüche, **dadurch gekennzeichnet, dass** das Magazin (11) vollständig biologisch abbaubar ist.

9. Magazin nach einem der vorhergehenden Ansprüche, **dadurch gekennzeichnet, dass** das Magazin (11) streifenförmig ausgebildet ist.

10. **Befülltes Magazin** (10), umfassend ein Magazin (11) nach einem der vorhergehenden Ansprüche und wenigstens ein Befestigungsmittel (100) mit einem Kragen (112), wobei bei wenigstens einem der Befestigungsmittel (100) der Kragen (112) des Befestigungsmittels (100) von wenigstens einem Eingriffsfinger (14) gehalten ist.

11. **Verwendung** eines befüllten Magazins (11) nach Anspruch 10 durch einen Bauroboter zum Setzen des Befestigungsmittels (100) in eine Wand und / oder eine Decke auf einer Baustelle.

## Claims

1. Magazine (11) suitable for receiving at least one fastening means (100),
- wherein the magazine (11) comprises at least one receiving cell (12),
- wherein each receiving cell (12) has a cell frame (16) which has a passage opening (18), wherein the passage opening (18) extends through the receiving cell (12),
- wherein each receiving cell (12) has a multiplicity of engagement fingers (14) which, by way of their free ends, extend from the cell frame (16) into the passage opening (18), wherein each of the engagement fingers (14) has at least one bar (34),
**characterized in that** the magazine (11) is formed from a biodegradable material.

2. Magazine according to the preceding claim, **characterized in that** at least one engagement finger (14) of a receiving cell (12) has at least two bars (34).

3. Magazine according to either of the preceding claims, **characterized in that** at least one engagement finger (14) of a receiving cell (12) has a control contour (36) such that, when pressure is applied to the control contour (36) along an insertion direction (R), the engagement finger (14) pivots out of the passage opening (18), in particular towards the cell frame (16).

4. Magazine according to one of the preceding claims, **characterized in that** two adjacent receiving cells (12) of the magazine (11) are connected to each other via a connecting portion (20), wherein the connecting portion (20) has a lower spring constant than an adjoining receiving cell (12).

5. Magazine according to one of the preceding claims, **characterized in that** the magazine (12) has at least one connector (22, 24) which is designed for connection to a further magazine (11).

6. Magazine according to the preceding claim, **characterized**
- **in that** the connector (22, 24) is in the form of a symmetrical connector, or
- **in that** the connector (22, 24) is in the form of an asymmetrical connector, wherein the magazine (11) has at least one female connector and at least one male connector, which is congruent with the female connector.

7. Magazine according to either of Claims 5 and 6, **characterized in that** the connector (22, 24) has a latching mechanism or at least one partial latching mechanism.

8. Magazine according to one of the preceding claims, **characterized in that** the magazine (11) is entirely biodegradable.

9. Magazine according to one of the preceding claims, **characterized in that** the magazine (11) is in the form of a strip.

10. Filled magazine (10), comprising a magazine (11) according to one of the preceding claims and at least one fastening means (100) having a collar (112), wherein, in the case of at least one of the fastening means (100), the collar (112) of the fastening means (100) is held by at least one engagement finger (14).

11. Use of a filled magazine (11) according to Claim 10 by a construction robot for setting the fastening means (100) in a wall and/or a ceiling on a construction site.

## Revendications

1. Magasin (11), adapté pour recevoir au moins un moyen de fixation (100),
- dans lequel le magasin (11) comprend au moins une cellule de réception (12),
- dans lequel chaque cellule de réception (12) présente un cadre de cellule (16) qui présente une ouverture de passage (18), l'ouverture de passage (18) s'étendant à travers la cellule de réception (12),
- dans lequel chaque cellule de réception (12) présente une pluralité de doigts de mise en prise (14) qui s'étendent à partir du cadre de cellule (16) par leur extrémité libre dans l'ouverture de passage (18), chacun des doigts de mise en prise (14) présentant au moins une entretoise (34),
**caractérisé en ce que** le magasin (11) est réalisé à partir d'un matériau biodégradable.

2. Magasin selon la revendication précédente, **caractérisé en ce qu'**au moins un doigt de mise en prise (14) d'une cellule de réception (12) présente au moins deux entretoises (34).

3. Magasin selon l'une quelconque des revendications précédentes, **caractérisé en ce qu'**au moins un doigt de mise en prise (14) d'une cellule de réception (12) présente un contour de commande (36) de sorte qu'en cas de pression sur le contour de commande (36) le long d'une direction d'emboîtement (R), le doigt de mise en prise (14) s'écarte hors de l'ouverture de passage (18), en particulier en direction du cadre de cellule (16).

4. Magasin selon l'une quelconque des revendications précédentes, **caractérisé en ce que** deux cellules de réception (12) voisines du magasin (11) sont reliées ensemble par l'intermédiaire d'une partie de liaison (20), la partie de liaison (20) présentant une dureté de ressort inférieure à une cellule de réception (12) adjacente.

5. Magasin selon l'une quelconque des revendications précédentes, **caractérisé en ce que** le magasin (12) présente au moins un connecteur (22, 24) qui est conçu pour la connexion avec un magasin supplémentaire (11).

6. Magasin selon la revendication précédente, **caractérisé**
- **en ce que** le connecteur (22, 24) est réalisé comme un connecteur symétrique, ou
- **en ce que** le connecteur (22, 24) est réalisé comme un connecteur asymétrique, le magasin (11) présentant au moins un connecteur femelle et au moins un connecteur mâle congruent avec le connecteur femelle.

7. Magasin selon l'une quelconque des revendications 5 ou 6, **caractérisé en ce que** le connecteur (22, 24) présente un mécanisme d'enclenchement ou du moins un mécanisme d'enclenchement partiel.

8. Magasin selon l'une quelconque des revendications précédentes, **caractérisé en ce que** le magasin (11) est entièrement biodégradable.

9. Magasin selon l'une quelconque des revendications précédentes, **caractérisé en ce que** le magasin (11) est réalisé en forme de bande.

10. Magasin rempli (10), comprenant un magasin (11) selon l'une quelconque des revendications précédentes et au moins un moyen de fixation (100) muni d'une collerette (112), dans lequel, au moins sur l'un des moyens de fixation (100), la collerette (112) du moyen de fixation (100) est maintenue par au moins un doigt de mise en prise (14).

11. Utilisation d'un magasin rempli (11) selon la revendication 10 par un robot de construction pour poser le moyen de fixation (100) dans un mur et/ou un plafond sur un chantier.
